# EUROPÄISCHE PATENTSCHRIFT

(11) **EP 1 862 349 B1**
(45) Veröffentlichungstag und Bekanntmachung des Hinweises auf die Patenterteilung: **26.06.2013**
(21) Anmeldenummer: 07450087.7
(22) Anmeldetag: 09.05.2007
(51) Int. Cl.: B60M 1/24

(54) **Fahrdraht-Seitenhalter**
Contact wire lateral retainers
Dispositif de fixation latérale d'un fil de frottement de caténaire

(30) Priorität: 10.05.2006 AT 8042006
(43) Veröffentlichungstag der Anmeldung: 05.12.2007
(73) Patentinhaber: Wimmer, Günther, 8200 Gleisdorf (AT)
(72) Erfinder: Wimmer, Günther, 8200 Gleisdorf (AT)
(74) Vertreter: Schweinzer, Friedrich

(56) Entgegenhaltungen:
- DE-A1- 2 507 696
- DE-U1- 29 616 721
- FR-A- 1 016 213
- FR-A- 1 016 249

## Beschreibung

Die Erfindung betrifft einen Fahrdraht-Seitenhalter zur Befestigung von Fahrdrähten von elektrischen Oberleitungen für Bahnfahrzeuge.

Im Bahnbereich kommt es bei elektrifizierten Streckenabschnitten, oft zu einseitigen Fahrdrahtabnützungen an Oberleitungen, da der Fahrdraht am Stützpunkt nicht senkrecht zum Schleifstück liegt. Diese Schieflagen bezüglich Fahrdraht und Stromabnehmer treten auf, weil herkömmliche Seitenhalterköpfe (zumeist starre, nicht veränderbare Ausführungen) nur für ganz bestimmte Seitenhalterneigungen und Gleisüberhöhungen konzipiert sind. In geringerem Ausmaß spielen auch Fahrdrahtauslenkungen und Bügelradius eine Rolle. Betrachtet man all diese Einflüsse, so stellt sich an jedem Stützpunkt eine spezielle nahezu einzigartige Situation dar.

Um Höhenunterschiede auszugleichen bzw. den dadurch entstehenden Verschleiß an der Halterung zu minimieren schlägt die DE 297 23 986 U1 einen Parallelhaltearm mit einer Dämpfung vor. Die DE 296 16 721 U1 beschreibt einen Fahrdraht-Seitenhalter mit einem Seitenhalterkopf, der mittels einer Schraube in verschiedenen, vorbestimmten Positionen festgeschraubt werden kann. Damit kann eine Schieflage eines Stromabnehmers nur stufenweise und unzureichend ausgeglichen werden.

Mit der JP2003080977A können zwar Schräglagen des Fahrdrahts gegenüber dem Schleifstück des Stromabnehmers korrigiert werden, gleichzeitig wird dabei jedoch der Fahrdraht in der horizontalen und vertikalen Lage stark verändert. Um die selbe seitliche Lage des Fahrdrahts am Schleifstück wieder einzunehmen, müssen aufwendige Verstellarbeiten am Seitenhalter bzw. Auslegerarm vorgenommen werden. Die Veränderung der Schräglage des Fahrdrahts erfolgt über ein Gelenk. Durch diese Bauweise wird während des Betriebes, infolge Fahrdrahteckzüge bei Gleisradien und Fahrleitungsschwingungen, eine Störanfälligkeit begünstigt. Weiters wird durch Verschmutzung während des Betriebes und durch Witterungseinflüsse, die Funktionalität des Einstellmechanismus eingeschränkt. Die FR-A-1016213 beschreibt einen Fahrdraht-Seitenhalter, bei dem bei Veränderungen an der Fahrdrahtdrehung gleichzeitig die Fahrdrahtposition am Stromabnehmer verändert wird. Diese müssen jedoch gemäß den Vorgaben für die Abnahme einer Fahrleitung im Wesentlichen konstant bleiben. Die FR-A-1016249 zeigt eine Fahrdraht -Seitenhalter, bei dem ebenso bei Veränderungen an der Fahrdrahtdrehung gleichzeitig die Fahrdrahtposition am Stromabnehmer verändert wird. Die DE 2507696 bezieht sich auf eine Fahrleitungsdoppelklemme und weist dieselben Nachteile auf, wie die zuvor genannten Druckschriften.

Ziel der Erfindung ist es, alle obigen Aspekte bei jedem Stützpunkt zu berücksichtigen, wobei die Fahrdrahtlage bei jedem Tragwerk, der vorhandenen Situation gemäß, einstellbar sein soll und auch die Fahrdrahtlage nach späteren Veränderungen im Bereich eines Stützpunkts, etwa nach Umbauten, meist neu angepasst werden kann. Die Erfindung ist daher dadurch gekennzeichnet, dass der Fahrdraht-Seitenhalter einen individuell und stufenlos einstellbaren Seitenhalterkopf aufweist. Dadurch kann ein voreingestellter Winkel des angelieferten Bauteils im montierten Zustand nachjustiert werden wobei in jedem Fall eine normale (rechtwinkelige) Lage des Fahrdrahts auf das Schleifstück des Stromabnehmers erreicht wird. Aber auch bei Veränderungen an Gleisneigungen, Fahrdrahtauslenkungen etc. kann eine Anpassung der exakten Ausrichtung des Fahrdrahts einfach und schnell durchgeführt werden, da die Einstellarbeiten am Seitenhalterkopf im eingebauten Zustand durchgeführt werden können.

Eine vorteilhafte Weiterbildung der Erfindung ist dadurch gekennzeichnet, dass der Seitenhalterkopf einen Seitenhaltermantel aufweist, der mit einer darin geführten, drehbaren Justierhilfe versehen ist.

Eine günstige Ausgestaltung der Erfindung ist dadurch gekennzeichnet, dass der Seitenhaltermantel einen Führungsschlitz aufweist.

Eine günstige Weiterbildung der Erfindung ist dadurch gekennzeichnet, dass die Justierhilfe einen Führungsschlitz aufweist, dessen Längsachse einen spitzen Winkel zur Körperachse der Justierhilfe einschließt.

Besonders vorteilhaft ist es, wenn der Seitenhalterkopf einen Ringnutbolzen aufweist, wobei der Ringnutbolzen mit einer Fahrdrahtklemme verbunden sein kann. Eine vorteilhafte Ausgestaltung der Erfindung ist dadurch gekennzeichnet, dass eine Fixierschraube zum Feststellen der Justierhilfe und in der Folge der Position des Ringnutbolzens vorgesehen ist.

Eine günstige Weiterbildung der Erfindung ist dadurch gekennzeichnet, dass der Ringnutbolzen eine kugelförmige Erweiterung aufweist, wobei der Durchmesser der kugelförmigen Erweiterung dem Innendurchmesser der Justierhilfe entsprechen und damit der Ringnutbolzen in der Justierhilfe geführt werden kann.

Durch die Verwendung unterschiedlich langer Ringnutbolzen können mechanische und elektrische Mindestabstände leichter erreicht werden.

Durch eine nahezu vollständige Kapselung des Einstellmechanismus des Fahrdraht-Seitenhalters wird die Verschmutzung des Einstellmechanismus während des Betriebes verhindert.

Durch das Vermeiden von Gelenken in der Bauweise des Fahrdraht-Seitenhalters wird die Störanfälligkeit während des Betriebes vermieden.

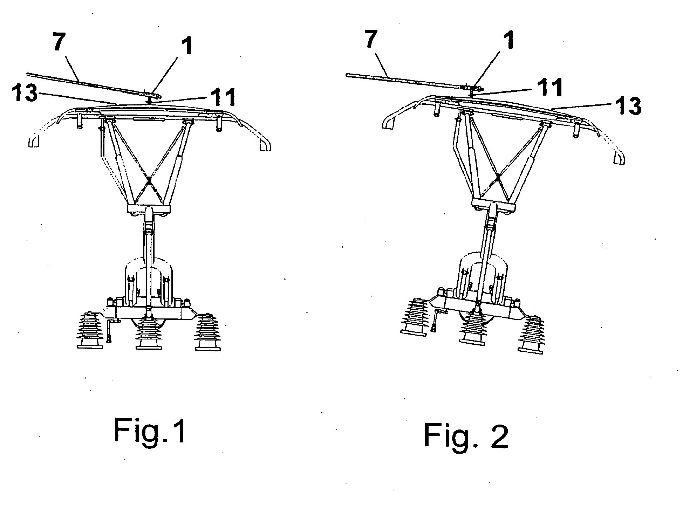

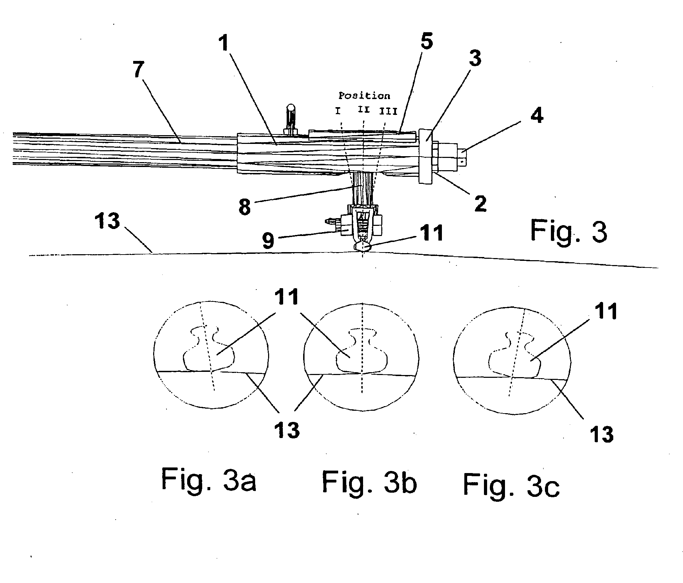

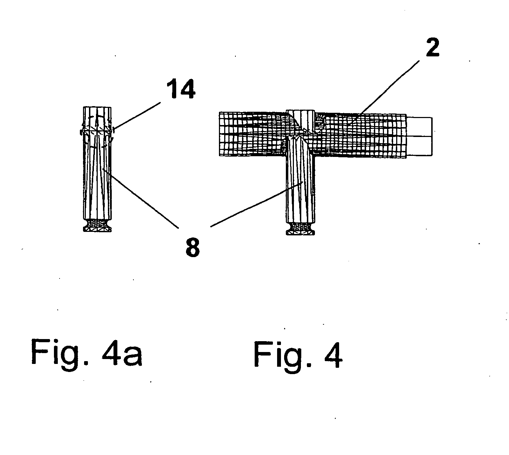

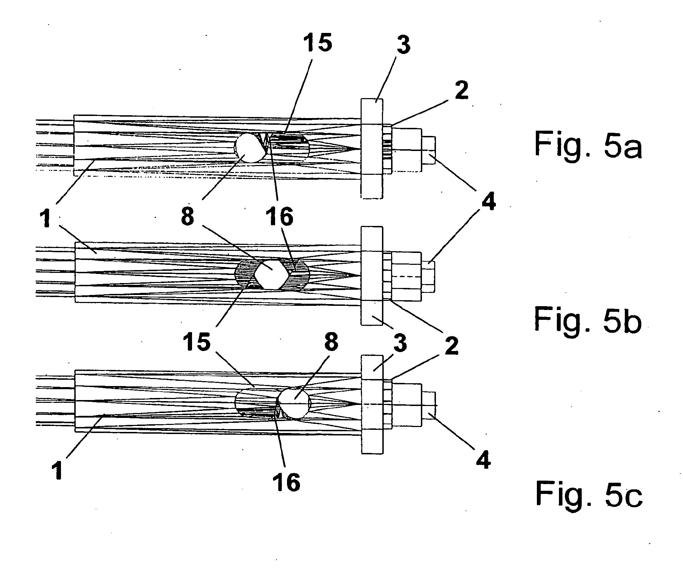

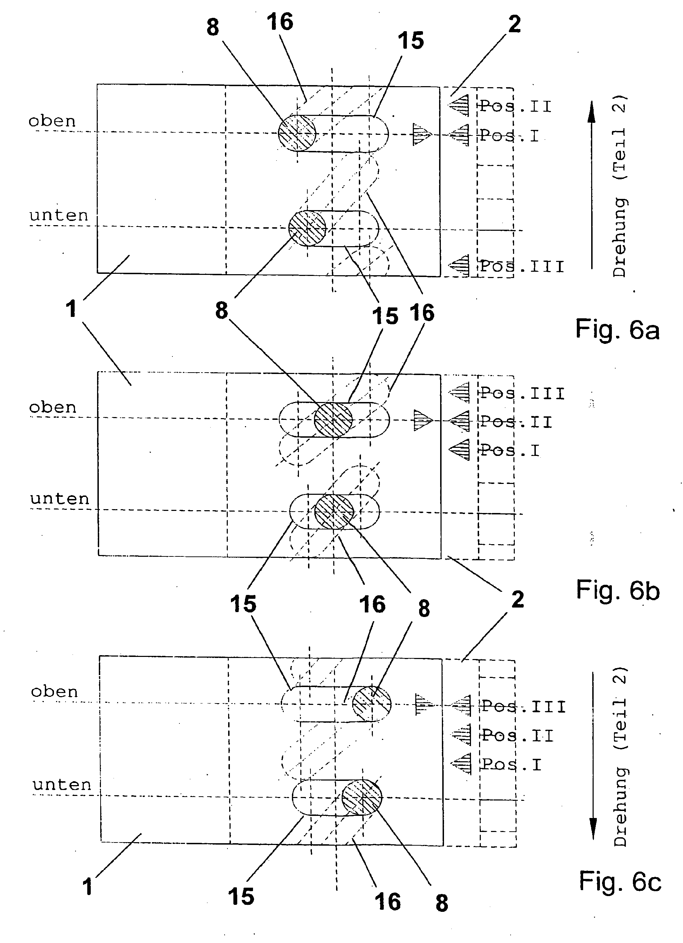

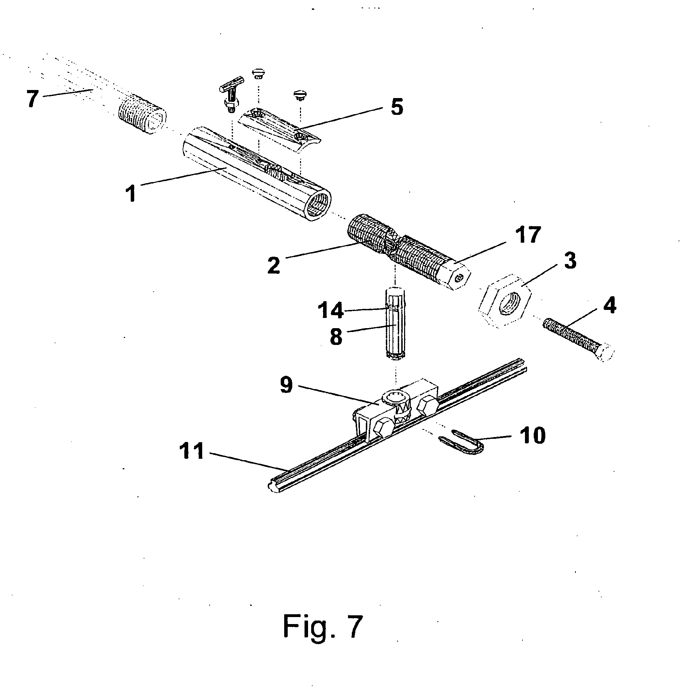

Die Erfindung wird nun anhand der Zeichnung beispielhaft beschrieben, wobei Fig. 1 die Situation eines Seitenhalters und Stromabnehmers bei waagrechtem Gleis, Fig. 2 die Situation bei Gleisüberhöhung, Fig. 3 einen erfindungsgemäßen Seitenhalter, Fig. 3a, b, c die Auflage des Fahrdrahts bei verschiedenen Positionen, Fig. 4 einen erfindungsgemäßen Seitenhalter (Justierhilfe) mit Ringnutbolzen, Fig. 4a einen Ringnutbolzen der Erfindung, Fig. 5 a, b, c unterschiedliche Positionen des Ringnutbolzens im Seitenhalter, Fig. 6 a, b, c eine Abrollung des Seitenhalters der Fig. 5 a, b, c und Fig. 7 eine Explosionszeichnung eines erfindungsgemäßen Fahrdraht-Seitenhalters darstellt.

Fig. 1 zeigt einen Stromabnehmer 13 eines Schienenfahrzeugs bei waagrechtem Gleis. Der Seitenhalter weist das Seitenhalterrohr 7 und einen Seitenhalterkopf 1 auf, an dem ein Fahrdraht 11 befestigt ist. Dieser Fahrdraht 11 steht mit dem Stromabnehmer 13 in Berührung, wobei über die Berührungsfläche der Strom übertragen wird.

In Fig. 2 ist die Situation eines Schienenfahrzeugs bei einer Gleisüberhöhung und damit einer geringeren Seitenhalterneigung dargestellt. Aus dem Vergleich mit Fig. 1 ist erkennbar, dass hier der Kontakt zwischen Fahrdraht 11 und Stromabnehmer 13 nur mehr mit einem Teil der Auflagefläche erfolgt. Dadurch ergibt sich auch eine schräge Abnutzung des Fahrdrahtes, was zu einem höheren Verschleiß und früheren Austausch führt.

Fig. 3 zeigt die Anordnung eines erfindungsgemäßen Seitenhalters mit dem Seitenhalterrohr 7, mit dem der Seitenhalter am Tragwerk und in der Folge am Mast befestigt ist, einem Seitenhalterkopf 1 in dem sich eine (hier nicht sichtbare) drehbare Justierhilfe befindet. Der Ringnutbolzen 8, an dem der Fahrdraht 11 mittels einer Fahrdrahtklemme 9 befestigt ist, kann nun in verschiedene Positionen I, II, III gebracht werden. Dadurch ergibt sich eine unterschiedliche Auflage des Fahrdrahtes 11 am Stromabnehmer 13. Durch die spezielle Führung des Ringnutbolzens 8 im Seitenhalterkopf 1 und Justierhilfe 2 wird erreicht, dass sich der Drehpunkt für die Fahrdraht-Achsdrehung immer an der Unterseite des Fahrdrahts 11 befindet. Damit wird sichergestellt, dass nach erfolgter Einstellung keine Veränderungen in der horizontalen und praktisch keine Veränderungen in der vertikalen Lage des Fahrdrahtes auftreten.

Aufwändige Nacharbeiten werden dadurch vermieden.

Die Situation zwischen Fahrdraht 11 und Stromabnehmer 13 für die einzelnen Positionen des Ringnutbolzens 8 sind in den Fig. 3a (Position I), 3b (Position II) und 3c (Position III) dargestellt. Es ist hier deutlich erkennbar, dass der Drehpunkt immer am untersten Punkt des Fahrdrahtes 11 ist.

In Fig. 4 ist ein erfindungsgemäßer Ringnutbolzen 8 und seine Position in der Justierhilfe 2 dargestellt. Durch Verdrehung der Justierhilfe 2 lässt sich die Neigung der Achse des Ringnutbolzens 8 leicht stufenlos verstellen. Fig. 4a zeigt einen Ringnutbolzen 8 im Detail, wobei hier gut die kugelförmige Erweiterung 14 zu sehen ist, die dem Innendurchmesser der Justierhilfe 2 entspricht. Durch diese Erweiterung 14 wird der Ringnutbolzen 8 im Bereich der Drehachse der Justierhilfe 2 geführt.

Die Fig. 5a, 5b und 5c zeigen eine Draufsicht auf den Seitenhalterkopf 1. Dabei ist deutlich die Position des Ringnutbolzens 8 erkennbar. Dieser Bolzen wird in einer Längsnut 15 im Seitenhalterkopf 1 einerseits und durch zwei gegenüberliegende Quernuten 16 in der Justierhilfe 2 andererseits geführt. Durch Drehung der Justierhilfe 2 wird nun eine Veränderung der Lage des Ringnutbolzens 8 erreicht, was in weiterer Folge auch eine Veränderung der Lage des Fahrdrahtes 11 bedingt. Ist eine bestimmte Einstellung der Position vorgenommen, kann die Justierhilfe 2 mittels einer Fixiermutter 3 gegenüber dem Seitenhalterkopf 1 fixiert werden.

Zur Veranschaulichung der Funktionsweise ist in den Fig. 6a, 6b und 6c eine Abrollung der Oberfläche des Seitenhalterkopfes 1 (Volllinie), der Justierhilfe 2 (strichlierte Linie) sowie einem Schnitt durch den Ringnutbolzen 8 (Schraffur) für die drei in Fig. 3 dargestellten Positionen I, II und III gezeigt.

Man kann hier erkennen, dass aus der Mittelposition (Position II, Fig. 6b) heraus durch Drehung der Justierhilfe 2 mit den Quernuten 16 eine Verschiebung des Ringnutbolzens 8 in den Längsnuten 15 im Seitenhalter 1 und damit eine Veränderung der Position erfolgt. Fig. 7 zeigt nun eine Explosionszeichnung eines erfindungsgemäßen Fahrdraht-Seitenhalters mit einem Seitenhalterrohr 7, an dem der Seitenhalterkopf 1 befestigt ist. Zum Schutz vor Verschmutzung und Witterungseinflüssen wird der obere Teil mit der Längsnut 15 durch eine Abdeckung 5 abgedeckt. Die drehbare Justierhilfe 2, die im Seitenhalterkopf 1 montiert wird, weist einen Einstellsechskant 17 auf, mit dem in einfacher Weise eine Verstellung des im Seitenhalter 1 und in der Justierhilfe 2 geführten Ringnutbolzens 8 erfolgen kann. Zum Fixieren der Position ist eine Fixiermutter 3 vorgesehen. Durch einen einfachen Mechanismus können beim selben Bauteil unterschiedliche Längen von Ringnutbolzen zum Einsatz kommen. Um den Wechsel von Ringnutbolzen 8 mit verschiedenen Längen zu ermöglichen, sind in Position III der Seitenhalter 1 und die Justierhiffe 2 bis in Größe des Rohrinnendurchmessers der Justierhilfe 2 aufgebohrt. Diese äußerste Position ist ausschließlich für den Tausch bestimmt. Für den normalen Betrieb kann dieser äußerste Bereich nicht zur Gänze genützt werden und ist mittels der Wechselschraube 4 gesichert.

Der Ringnutbolzen 8 wird mittels eines Bügelsplints 10 in der Fahrdrahtklemme 9 gehalten, wobei der Fahrdraht 11 durch die Fahrdrahtklemme 9 gehalten wird.

## Patentansprüche

1. Fahrdraht-Seitenhalter zur Befestigung von Fahrdrähten (11) von elektrischen Oberleitungen für Bahnfahrzeuge, wobei der Fahrdraht-Seitenhalter einen individuell und stufenlos einstellbaren Seitenhalterkopf (1) aufweist, **dadurch gekennzeichnet, dass** der Seitenhalterkopf (1) mit einer darin geführten, drehbaren Justierhilfe (2) versehen ist.

2. Fahrdraht-Seitenhalter nach Anspruch 1, **dadurch gekennzeichnet, dass** der Seitenhaltermantel (1) einen Führungsschlitz (15) aufweist.

3. Fahrtdraht-Seitenhalter nach Anspruch 1 oder 2, **dadurch gekennzeichnet, dass** die Justierhilfe (2) einen Führungsschlitz (16) aufweist, dessen Längsachse einen spitzen Winkel zur Körperachse der Justierhilfe (2) einschließt.

4. Fahrdraht-Seitenhalter nach einem der Ansprüche 1 bis 3, **dadurch gekennzeichnet, dass** der Seitenhalterkopf einen Ringnutbolzen (8) aufweist.

5. Fahrdraht-Seitenhalter, nach Anspruch 4, **dadurch gekennzeichnet, dass** der Ringnutbolzen (8) mit einer Fahrdrahtklemme (9) verbunden ist.

6. Fahrdraht-Seitenhalter nach einem der Ansprüche 1 bis 5, **dadurch gekennzeichnet, dass** eine Fixiermutter (3) zum Feststellen der Justierhilfe (2) und in der Folge der Position des Ringnutbolzens (8) vorgesehen ist

7. Fahrdraht-Seitenhalter nach einem der Ansprüche 4 bis 6, **dadurch gekennzeichnet, dass** der Ringnutbolzen (8) eine kugelförmige Erweiterung (14) aufweist.

8. Fahrdraht-Seitenhalter nach Anspruch 7, **dadurch gekennzeichnet, dass** der Durchmesser der kugelförmigen Erweiterung (14) dem Innendurchmesser der Justierhilfe (2) entspricht.

9. Fahrdraht-Seitenhalter nach einem der Ansprüche 1 bis 8, **dadurch gekennzeichnet, dass** sich der Drehpunkt für die Fahrdraht-Achsdrehung immer an der Unterseite des Fahrdrahts (11) befindet.

10. Fahrdraht-Seitenhalter nach einern der Ansprüche 1 bis 9, **dadurch gekennzeichnet, dass** nach erfolgter Einstellung keine Veränderung in der horizontalen und keine (oder nur geringfügige) Veränderungen in der vertikalen Lage des Fahrdrahts (11) auftreten.

11. Fahrdraht-Seitenhalter nach einem der Ansprüche 1 bis 10, **dadurch gekennzeichnet, dass** der Seitenhalterkopf (1) derart ausgestaltet ist, dass Einstellarbeiten daran im eingebauten Zustand durchgeführt werden können.

12. Fahrdraht-Seitenhalter nach einem der Ansprüche 1 bis 11, **dadurch gekennzeichnet, dass** eine Veränderung der Länge des Ringnutbolzens (8) rasch durchgeführt werden kann.

13. Fahrdraht-Seitenhalter nach Anspruch 12, **gekennzeichnet durch** den Einsatz unterschiedlich langer Ringnutbolzen (8).

14. Fahrdraht-Seitenhalter nach Anspruch 1, **gekennzeichnet durch** eine gelenkslose Bauweise.

15. Fahrdraht-Seitenhalter nach einem der vorhergehenden Ansprüche, **gekennzeichnet durch** eine zumindest teilweise, vorzugsweise nahezu vollständige Kapselung (1, 5) des Fahrdraht-Seitenhalters, insbesondere dessen Einstellmechanismus.

## Claims

1. Lateral contact wire holder for the fixing of contact wires (11) of electrical overhead lines of rail cars, whereby the lateral contact wire holder featuring an individually and continuously adjustable lateral holder head (1), **characterized by** the lateral holder head being fitted with a guided, pivotable adjusting aid (2).

2. Lateral contact wire holder according to claim 1, **characterized by** the lateral holder casing (1) featuring a guiding slot (15).

3. Lateral contact wire holder according to claim 1 or 2, **characterized by** the adjusting aid (2) featuring a guiding slot (15) whose longitudinal axis encloses a sharp angle to the adjusting aid's (2) body axis.

4. Lateral contact wire holder according to one of the claims 1 to 3, **characterized by** the lateral holder head featuring a ring groove pin (8).

5. Lateral contact wire holder according to claim 4, **characterized by** the ring groove pin (8) being connected to a contact wire clamp (9).

6. Lateral contact wire holder according to one of the claims 1 to 5, **characterized by** a fixing nut (3) being provided for locking the adjusting aid (2) and in consequence the position of the ring groove pin (8).

7. Lateral contact wire holder according to one of the claims 4 to 6, **characterized by** the ring groove pin (8) featuring a spherical extension (14).

8. Lateral contact wire holder according to claim 7, **characterized by** the diameter of the spherical extension (14) corresponding to the inner diameter of the adjusting aid (2).

9. Lateral contact wire holder according to one of the claims 1 to 8, **characterized by** the pivot for the contact wire gyration always being located at the bottom of the contact wire (11).

10. Lateral contact wire holder according to one of the claims 1 to 9, **characterized by** no change occurring in the horizontal and no changes (or only minor ones) occurring in the vertical position of the contact wire (11) after adjustment.

11. Lateral contact wire holder according to one of the claims 1 to 10, **characterized by** the lateral holder head (1) being designed so that adjustments on it can be carried out while installed.

12. Lateral contact wire holder according to one of the claims 1 to 11, **characterized by** the possibility to quickly change the length of the ring groove pin (8).

13. Lateral contact wire holder according to claim 12, **characterized by** the use of the ring groove pins (8) of varying length.

14. Lateral contact wire holder according to claim 1, **characterized by** a hingeless construction.

15. Lateral contact wire holder according to one of the previous claims, **characterized by** an at least partial, preferably near-complete metal-cladding (1, 5) of the lateral contact wire holder, in particular of the adjusting mechanism.

## Revendications

1. Dispositif de fixation du pendule latéral du fil de contact (11) de la ligne caténaire électrique, tel que le dispositif de fixation du pendule latéral ayant une tête du pendule latéral (1) ajustable individuel et sans degrés, **caractérisé en ce que** la tête du pendule latéral (1) ayant une aide de ajustage (2) guidée et rotatif dans la tête.

2. Dispositif de fixation du pendule latéral du fil de contact tel que revendication 1, caractérisé que le dispositif de fixation du pendule latéral (1) ayant une fente à guider (15).

3. Dispositif de fixation du pendule latéral du fil de contact tel que revendication 1 ou 2, **caractérisé en ce que** l'aide ajustage (2) ayant une fente à guider (16), quelle arbre longitudinal à un angle aigu à l'arbre de l'aide de ajustage (2).

4. Dispositif de fixation du pendule latéral du fil de contact tel que revendications 1 à 3, **caractérisé en ce que** la tête du pendule latéral a un goujon avec une gorge de retenue (8).

5. Dispositif de fixation du pendule latéral du fil de contact tel que revendication 4, **caractérisé en ce que** le goujon avec une gorge de retenue (8) est connecter avec une borne du fil de contact (9).

6. Dispositif de fixation du pendule latéral du fil de contact tel que revendications 1 à 5, caractérisé qu'un écrou à fixer (3) est prévue pour fixer l'aide de ajustage (2) et en suite la position du goujon avec une gorge de retenue (8).

7. Dispositif de fixation du pendule latéral du fil de contact tel que revendications 4 à 6, **caractérisé en ce que** le goujon avec une gorge de retenue (8) à une extension sphérique (14).

8. Dispositif de fixation du pendule latéral du fil de contact tel que revendication 7, **caractérisé en ce que** l'extension sphérique (14) est égal au diamètre intérieure de l'aide de ajustage (2).

9. Dispositif de fixation du pendule latéral du fil de contact tel que revendications 1 à 8, **caractérise en ce que** le centre de rotation pour la rotation du fil de contact est toujours au partie inférieure du fil de contact (11).

10. Dispositif de fixation du pendule latéral du fil de contact tel que revendications 1 à 9, **caractérise en ce que** après l'ajustage aucun changement de la position horizontal et aucun changement (ou seulement un changement insignifiant) vertical du fil de contact (11) apparaît.

11. Dispositif de fixation du pendule latéral du fil de contact tel que revendications 1 à 10, **caractérise en ce que** la tête du pendule latéral (1) est arrangé comme travail ajustage peut être exécuté en condition en mettre en place.

12. Dispositif de fixation du pendule latéral du fil de contact tel que revendications 1 à 11, **caractérise en ce que** un changement de la longueur du goujon avec une gorge de retenue (8) est possible rapidement.

13. Dispositif de fixation du pendule latéral du fil de contact tel que revendication 12, **caractérisé en ce que** des goujons avec une gorge de retenue (8) avec de longueur différente s'emploient.

14. Dispositif de fixation du pendule latéral du fil de contact tel que revendication 1, **caractérisé en ce que** un type de construction sans joint est prévue.

15. Dispositif de fixation du pendule latéral du fil de contact tel qu'un des revendications précédent, **caractérisé par** une enveloppe (1, 5) au moins, préférable complètement de la fixation du pendule latéral du fil de contact, en particulier de son mécanisme d'ajustage.
